# EUROPÄISCHE PATENTANMELDUNG

(11) **EP 4 275 915 A1**
(43) Veröffentlichungstag der Anmeldung: **15.11.2023**
(21) Anmeldenummer: 23173005.2
(22) Anmeldetag: 12.05.2023
(51) Int. Cl.: B60C 1/00, C08L 7/00, C08L 9/00

(54) **FAHRRADREIFEN UND VERFAHREN ZUM RECYCLING VON FAHRRADREIFEN**

(30) Priorität: 12.05.2022 DE 102022204644
(71) Anmelder: Continental Reifen Deutschland GmbH, 30165 Hannover (DE)
(72) Erfinder: Kahner, Rainer, 30165 Hannover (DE); Eder, Jan Martin, 30165 Hannover (DE); Siemers, Arne, 30165 Hannover (DE)
(74) Vertreter: Continental Corporation

(57) **Zusammenfassung**

Die Erfindung betrifft einen Fahrradreifen, und ein Verfahren zum Recycling von Fahrradreifen.

Der erfindungsgemäße Fahrradreifen aufweisend eines oder mehrere kautschukhaltige Bauteile ist dadurch gekennzeichnet, dass er in sämtlichen kautschukhaltigen Bauteilen eine Kautschukmischung aufweist, die schwefelvernetzt ist und
a) wenigstens einen Dienkautschuk enthält, der ausgewählt ist aus der Gruppe bestehend aus natürlichem Polyisopren (NR), synthetischem Polyisopren (IR), Butadien-Kautschuk (BR) und Styrol-Butadien-Kautschuk (SBR);
und wobei sämtliche Kautschukmischungen der kautschukhaltigen Bauteile
b) frei von Ethylen-Propylen-Dien-Kautschuken und frei von Butylkautschuken und frei von halogenierten Butylkautschuken sind.

## Beschreibung

Die Erfindung betrifft einen Fahrradreifen, und ein Verfahren zum Recycling von Fahrradreifen.

Fahrradreifen enthalten bekanntermaßen - wie andere Fahrzeugreifen - üblicherweise einen oder mehrere vernetzte Kautschuke.

Zur Erlangung einer ausreichenden Luftdichtigkeit und Alterungsbeständigkeit sowie Farbechtheit können Fahrradreifen, insbesondere schlauchlose Fahrradreifen und/oder Fahrradreifen für besondere Anforderungen ("high performance Anforderungen"), unter anderem Ethylen-Propylen-Dien-Kautschuke (EPDM-Kautschuke) und Butylkautschuke (IIR) und/oder Halobutylkautschuke (wie CIIIR oder BrIIR) aufweisen.

Derartige Kautschuke beeinträchtigen allerdings die Recycling-Fähigkeit des Fahrradreifens, da insbesondere Recycling-Produkte wie Gummimehl und Regenerate enthaltend EPDM-Kautschuke, Butylkautschuke (IIR) und/oder Halobutylkautschuke nur in wenigen technischen Gummiartikeln wiederverwendet werden können.

Im Sinne der Nachhaltigkeit wäre es nämlich wünschenswert, auch Fahrradreifen zu recyceln.

Halobutylkautschuke haben zunächst den Nachteil, dass sie bereits bei der Pyrolyse eine Abgasbehandlung aufgrund der Halogene erforderlich machen, was diese Form des Recyclings zusätzlich zum Energieaufwand noch aufwändiger macht.

Neben der energieaufwändigen Pyrolyse zu Pyrolyseprodukten, wie Pyrolyseöl und Pyrolyserußen, die teilweise aufgrund ihrer Eigenschaften nur eingeschränkt in Gummiartikeln wiederverwendet werden, ist die Aufarbeitung von Altreifen zu Gummimehl ökologisch und ökonomisch interessant.

Gummimehl kann als Rohmaterial wieder technischen Gummiartikeln zugeführt werden.

Ferner kann Gummimehl einer Regenerierung unterzogen werden, um mit den hergestellten Regeneraten wieder möglichst nahe an den Zustand der ursprünglichen Rohkautschuke zu gelangen.

Oftmals werden Bauteile mit derartigen unerwünschten Materialien wie die oben genannten Kautschuke daher im ersten Schritt des Recyclings eines Reifens aufwändig von den übrigen, leichter recycelbaren Bauteilen abgetrennt. Gerade bei einem im Vergleich zu anderen Reifen filigraneren Fahrradreifen ist dies aber aufgrund der Schichtdicken der betroffenen Bauteile nicht immer kontaminationsfrei möglich.

Der vorliegenden Erfindung liegt daher die Aufgabe zugrunde, einen Fahrradreifen aufweisend eines oder mehrere kautschukhaltige Bauteile bereitzustellen, der einfacher recycelt werden kann und dessen Recyclingprodukte, insbesondere Gummimehl und Regenerat, eine hohe Qualität aufweisen und in einer Vielzahl von technischen Gummiartikeln, umfassend Fahrzeugreifen inklusive Fahrradreifen, wiederverwendet werden können.

Eine damit verbundene Aufgabe der Erfindung ist zudem die Bereitstellung eines Verfahrens zum Recyceln von Fahrradreifen, welches einfach durchführbar ist und zu entsprechend nutzbaren Recyclingprodukten hoher Qualität führt.

Gelöst wird die Aufgabe durch den erfindungsgemäßen Fahrradreifen gemäß Anspruch 1.

Ferner wird die Aufgabe durch das erfindungsgemäße Verfahren zum Recyceln von Fahrradreifen gemäß Anspruch 10 gelöst.

Von der Erfindung sind zudem sämtliche untenstehenden Angaben und der Gegenstand der abhängigen Ansprüche umfasst.

Im Folgenden wird der erfindungsgemäße Fahrradreifen näher erläutert.

Sämtliche Angaben inklusive der Merkmale sämtlicher Bevorzugungsstufen und Ausführungsformen des Fahrradreifens gelten auch für das erfindungsgemäße Verfahren, und zwar auch im Hinblick auf die Kombination der Merkmale sämtlicher Bevorzugungsstufen und Ausführungsformen des Fahrradreifens mit Merkmalen sämtlicher Bevorzugungsstufen und Ausführungsformen des Verfahrens, sofern nicht ausdrücklich etwas anderes angegeben ist.

All diese sich ergebenden Merkmalskombinationen sind von der vorliegenden Erfindung umfasst.

Ferner umfasst die Erfindung sämtliche Kombinationen verschiedener Merkmale gleicher oder unterschiedlicher Bevorzugungsstufen und Ausführungsformen des Fahrradreifens miteinander.

Ferner umfasst die Erfindung sämtliche Kombinationen verschiedener Merkmale gleicher oder unterschiedlicher Bevorzugungsstufen und Ausführungsformen des Verfahrens miteinander.

Der erfindungsgemäße Fahrradreifen aufweisend eines oder mehrere kautschukhaltige Bauteile ist dadurch gekennzeichnet, dass er in sämtlichen kautschukhaltigen Bauteilen eine Kautschukmischung aufweist, die schwefelvernetzt ist und
a) wenigstens einen Dienkautschuk enthält, der ausgewählt ist aus der Gruppe bestehend aus natürlichem Polyisopren (NR), synthetischem Polyisopren (IR), Butadien-Kautschuk (BR) und Styrol-Butadien-Kautschuk (SBR);
   und wobei sämtliche Kautschukmischungen der kautschukhaltigen Bauteile
b) frei von Ethylen-Propylen-Dien-Kautschuken und frei von Butylkautschuken und frei von halogenierten Butylkautschuken sind.

Der Begriff "frei von" ist so zu verstehen, dass die jeweilige Kautschukmischung 0 (Null) phr bzw. 0 Gewichtsprozent an den genannten Kautschuken enthält. Dadurch dass der Fahrradreifen somit in keinem Bauteil EPDM-Kautschuke, Butylkautschuke (IIR) und/oder Halobutylkautschuke enthält, lässt er sich einfacher recyceln.

Die Notwendigkeit des Abtrennens von einzelnen Bauteilen, insbesondere von Schichten unterschiedlicher Kautschukmischungen, entfällt, da sämtliche Kautschukmischungen nur derartige Dienkautschuke enthalten, die miteinander kompatibel sind und insbesondere vor der Vernetzung (Vulkanisation) eine ausreichend hohe Anzahl an Doppelbindungen aufweisen.

Hierdurch sind diese Kautschuke und damit auch deren Recyclingprodukte, wie Gummimehl und Regenerate, für die Anwendung in hoch beanspruchten technischen Gummiartikeln, wie Fahrzeugreifen und dabei insbesondere in Laufstreifen, Gewebegummierung und/oder Seitenwand, geeignet.

Bei dem Fahrradreifen kann es sich um alle dem Fachmann bekannten Fahrradreifentypen handeln. Beispielsweise und bevorzugt ist der Fahrradreifen ein Rennradreifen, ein CityTrekking-, Gravel- oder Lastenradreifen, oder ein Mountain-Bike-Reifen oder ein Vollgummiradreifen.

Dabei kann der Fahrradreifen aus einem einzigen Bauteil oder aus mehreren Bauteilen gefertigt sein.

Erfindungswesentlich ist, dass in sämtlichen kautschukhaltigen Bauteilen die vorbeschriebenen Bedingungen a) und b) für die Kautschuke gelten.

Dabei ist dies insbesondere so zu verstehen, dass kein kautschukhaltiges Bauteil eine weitere Kautschukmischung aufweist, die EPDM-Kautschuke, Butylkautschuke (IIR) und/oder Halobutylkautschuke enthält, was den Gedanken der Erfindung konterkarieren würde.

Leicht abtrennbare Komponenten, wie insbesondere Schläuche, die ein Recycling ohnehin nicht erschweren, zählen im Rahmen der vorliegenden Erfindung nicht zu den Bauteilen des erfindungsgemäßen Fahrradreifens.

Dem Fachmann ist klar, dass kautschukhaltige Bauteile zusätzliche Komponenten umfassen können, wie insbesondere Festigkeitsträger.

Im Fall von zwei oder mehreren Bauteilen des Fahrradreifens können sich die Kautschukmischungen - unbeschadet der Bedingungen a) und b) - hinsichtlich der Auswahl der Kautschuke aus der Gruppe a) in deren Art und Menge sowie der sonstigen Mischungsbestandteile, wie beispielsweise hinsichtlich der Art und Menge von Füllstoffen und Weichmachern, voneinander unterscheiden.

Die in dieser Schrift verwendete Angabe phr (parts per hundred parts of rubber by weight) ist die in der Kautschukindustrie übliche Mengenangabe für Mischungsrezepturen. Die Dosierung der Gewichtsteile der einzelnen Substanzen wird in dieser Schrift auf 100 Gewichtsteile der gesamten Masse aller in der Mischung vorhandenen hochmolekularen (Gewichtsmittel der Molekulargewichtsverteilung M_{w} gemäß GPC größer als 60.000 g/mol) und dadurch festen Kautschuke bezogen.

Bei dem natürlichen und/oder synthetischen Polyisopren sämtlicher Ausführungsformen kann es sich sowohl um cis-1,4-Polyisopren als auch um 3,4-Polyisopren handeln. Bevorzugt ist allerdings die Verwendung von cis-1,4-Polyisoprenen mit einem cis-1,4 Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren, bei welchem der cis-1,4-Anteil im Naturkautschuk größer 99 Gew.-% ist.

Ferner ist auch ein Gemisch eines oder mehrerer natürlicher Polyisoprene mit einem oder mehreren synthetischen Polyisopren(en) denkbar.

Im Rahmen der vorliegenden Erfindung ist unter dem Begriff "Naturkautschuk" natürlich vorkommender Kautschuk zu verstehen, der von Hevea Gummibäumen und "Nicht-Hevea" Quellen gewonnen werden kann. Nicht-Hevea Quellen sind beispielsweise Guayule Sträucher und Löwenzahn wie beispielsweise TKS (Taraxacum kok-saghyz; Russischer Löwenzahn).

Falls in der jeweiligen Kautschukmischung Butadien-Kautschuk (= BR, Polybutadien) enthalten ist, kann es sich um alle dem Fachmann bekannten Typen handeln. Darunter fallen u.a. die sogenannten high-cis- und low-cis-Typen, wobei Polybutadien mit einem cis-Anteil größer oder gleich 90 Gew.-% als high-cis-Typ und Polybutadien mit einem cis-Anteil kleiner als 90 Gew.-% als low-cis-Typ bezeichnet wird. Ein low-cis-Polybutadien ist z.B. Li-BR (Lithium-katalysierter Butadien-Kautschuk) mit einem cis-Anteil von 20 bis 50 Gew.-%. Mit einem high-cis BR werden besonders gute Abriebeigenschaften sowie eine niedrige Hysterese der Kautschukmischung erzielt.

Das oder die eingesetzte(n) Polybutadiene kann/können mit Modifizierungen und Funktionalisierungen endgruppenmodifiziert und/oder entlang der Polymerketten funktionalisiert sein. Bei der Modifizierung kann es sich um solche mit HydroxyGruppen und/oder Ethoxy-Gruppen und/oder Epoxy-Gruppen und/oder SiloxanGruppen und/oder Amino-Gruppen und/oder Aminosiloxan und/oder CarboxyGruppen und/oder Phthalocyanin-Gruppen und/oder Silan-Sulfid-Gruppen handeln. Es kommen aber auch weitere, der fachkundigen Person bekannte, Modifizierungen, auch als Funktionalisierungen bezeichnet, in Frage. Bestandteil solcher Funktionalisierungen können Metallatome sein.

Für den Fall, dass wenigstens ein Styrol-Butadien-Kautschuk (Styrol-Butadien-Copolymer) in der jeweiligen Kautschukmischung enthalten ist, kann es sich sowohl um lösungspolymerisierten Styrol-Butadien-Kautschuk (SSBR) als auch um emulsionspolymerisierten Styrol-Butadien-Kautschuk (ESBR) handeln, wobei auch ein Gemisch aus wenigstens einem SSBR und wenigstens einem ESBR eingesetzt werden kann. Die Begriffe "Styrol-Butadien-Kautschuk" und "Styrol-Butadien-Copolymer" werden im Rahmen der vorliegenden Erfindung synonym verwendet.

Das eingesetzte Styrol-Butadien-Copolymer kann mit den oben beim Polybutadien genannten Modifizierungen und Funktionalisierungen endgruppenmodifiziert und/oder entlang der Polymerketten funktionalisiert sein.

Bevorzugt weist der erfindungsgemäße Fahrradreifen wenigstens in den äußeren Bauteilen eine Kautschukmischung auf, die wenigstens ein Alterungsschutzmittel enthält, welches ausgewählt ist aus der Gruppe bestehend aus p-Phenylendiaminen, Dihydrochinolinen, Phenylnaphtylaminen, substituierten Phenolen, substituierten Bisphenolen und Benzimidazolen.

Hierdurch wird eine gute Alterungsbeständigkeit der jeweiligen Kautschukmischung erzielt.

Insbesondere durch substituierte Phenole, substituierte Bisphenole und Benzimidazole wird die Farbechtheit der vorhandenen Kautschuke a) gewährleistet und ein unerwünschter Farbfilm durch Ausblühen vermieden.

Besonders bevorzugt ist das wenigstens eine Alterungsschutzmittel ausgewählt aus der Gruppe bestehend aus p-Phenylendiaminen, Phenolen, substituierten Bisphenolen und Benzimidazolen.

Ganz besonders bevorzugt ist das wenigstens eine Alterungsschutzmittel ausgewählt aus der Gruppe bestehend aus p-Phenylendiaminen, Phenolen und substituierten Bisphenolen.

Die genannten besonders bevorzugten, ganz besonders bevorzugten und wiederum besonders bevorzugten Verbindungsklassen stellen entsprechend besonders bevorzugte usw. und geeignete Vertreter dar.

Zusätzlich oder alternativ ist es bevorzugt, dass das wenigstens eine Alterungsschutzmittel ausgewählt ist aus der Gruppe bestehend aus N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD ), N-Isopropyl-N'-phenyl-p-phenylendiamin (IPPD), N,N'-Bis(1,4-dimethylpentyl)-p-phenylendiamin (77PD), 2-N,4-N,6-N-tris[4-(5-methylhexan-2-ylamino)phenyl]-1,3,5-triazin-2,4,6-triamin (PPD Triazin), Poly-2,2,-Trimethyl-1,2-dihydrochinolin (TMQ), N-Phenyl-1-naphthylamin (PAN),

2,2'-Methylenbis(4-methyl-6-tert-butylphenol) (BKF), 2,2'-(2-Methylpropyliden)bis[4,6-xylenol] (Handelsname LOWINOX^{®} 22IB46 ), 6,6'-Di-tert-butyl-4,4'-butylidendi-m-kresol (Handelsname LOWINOX^{®} 44B25), Butylhydroxytoluol (BHT), Poly(dicyclopentadiene-co-p-cresol), Styrolisiertes Phenol (SAPH) und 1,3-Dihydro-4-methyl-2H-benzimidazol-2-thion (MMBI).

Besonders bevorzugt ist das wenigstens eine Alterungsschutzmittel ausgewählt aus der Gruppe bestehend aus N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD ), N-Phenyl-1-naphthylamin (PAN), 2,2'-Methylenbis(4-methyl-6-tert-butylphenol) (BKF), 2,2'-(2-Methylpropyliden)bis[4,6-xylenol], 6,6'-Di-tert-butyl-4,4'-butylidendi-m-kresol und Poly-2,2,-Trimethyl-1,2-dihydrochinolin (TMQ).

Im Fall von nicht-schwarzen Gummierungen mit besonders hohen Anforderungen an die Farbechtheit ist das Alterungsschutzmittel bevorzugt ausgewählt aus der Gruppe bestehend aus N-Phenyl-1-naphthylamin (PAN), und 2,2'-Methylenbis(4-methyl-6-tert-butylphenol) (BKF), 2,2'-(2-Methylpropyliden)bis[4,6-xylenol], 6,6'-Di-tert-butyl-4,4'-butylidendi-m-kresol und Poly-2,2,-Trimethyl-1,2-dihydrochinolin (TMQ).

Besonders bevorzugt sind dabei 2,2'-Methylenbis(4-methyl-6-tert-butylphenol) (BKF), 2,2'-(2-Methylpropyliden)bis[4,6-xylenol] und 6,6'-Di-tert-butyl-4,4'-butylidendi-m-kresol.

Bevorzugt ist somit ein Fahrradreifen, der in wenigstens einem äußeren nicht-schwarzen Bauteil eine Kautschukmischung aufweist, die wenigstens ein Alterungsschutzmittel enthält, welches ausgewählt ist aus der Gruppe bestehend aus 2,2'-Methylenbis(4-methyl-6-tert-butylphenol) (BKF), 2,2'-(2-Methylpropyliden)bis[4,6-xylenol] und 6,6'-Di-tert-butyl-4,4'-butylidendi-m-kresol.

Hierdurch weist das entsprechende nicht-schwarze Bauteil einen sehr guten Alterungsschutz bei optimaler Farbechtheit auf.

Gemäß vorteilhafter Ausführungsformen der Erfindung weisen sämtliche Kautschukmischungen des erfindungsgemäßen Fahrradreifens wenigstens eines der oben genannten Alterungsschutzmittel, inklusive aller Bevorzugungsstufen, auf.

Sämtliche Kautschukmischungen des erfindungsgemäßen Fahrradreifens können weitere dem Fachmann bekannte Bestandteile, wie Füllstoffe, insbesondere Ruße und/oder Siliciumdioxide, Weichmacher, Kupplungsagenzien, insbesondere Silane, zur Dispersion von Füllstoffen und/oder zur Anbindung von Füllstoffen an Polymere, Ozonschutzwachse, Aktivatoren, wie Zinkoxid und Stearinsäure, enthalten.

Die Herstellung der Kautschukmischungen erfolgt auf dem Fachmann bekannte Weise, in dem jeweils zunächst in einer oder mehreren Stufen eine Kautschukgrundmischung hergestellt wird, wobei die Kautschukgrundmischung üblicherweise noch keine Vernetzungschemikalien enthält.

Im Anschluss wird der Kautschukgrundmischung dann ein Schwefelvulkanisationssystem zugegeben, welches Schwefel und/oder schwefelspendende Substanzen und bevorzugt einen oder mehrere Vulkanisations-Beschleuniger umfasst. Hierdurch wird jeweils eine unvulkanisierte schwefelvernetzbare Kautschukfertigmischung erzeugt.

Gegebenenfalls sind störende und Undichtigkeiten erzeugende Fremdkörper dadurch zu vermeiden, dass einer oder mehrere Strainer-Schritte in die Fertigung integriert werden.

Ferner werden Feinchemikalien wie Beschleuniger der jeweiligen Mischstufe bevorzugt vordispergiert zugegeben, um Störstellen und damit verbundene Undichtigkeiten in der hergestellten Kautschukmischung zu vermeiden. Beispielsweise kann der Beschleuniger Diphenylguanidin (DPG) bei der Herstellung der Kautschukfertigmischung in Öl oder Kautschuken dispergiert zugegeben werden.

Bevorzugt ist zudem ein erfindungsgemäßer Fahrradreifen, der keine Festigkeitsträger aufweist, welche Garne aus Flüssigkristallpolymeren (FKP; *engl.* "liquid crystal polymer") umfassen.

Hierdurch wird die Recyclingfähigkeit des Fahrradreifens weiter verbessert und das Verfahren zum Recyceln des erfindungsgemäßen Fahrradreifens weiter vereinfacht.

Synthetische Flüssigkristallpolymere, die bevorzugt nicht in dem erfindungsgemäßen Fahrradreifen vorhanden sind, umfassen Aramide, wie Kevlar^{®}, und aromatische Polyester, wie Vectran^{®}.

Bevorzugt weist der erfindungsgemäße Fahrradreifen somit keine Festigkeitsträgerlagen auf, welche eine vergleichsweise hohe Reißfestigkeit und eine vergleichsweise hohe Flexibilität aufweisen, da diese nicht spröde sind und daher bei der Scherung des Zerkleinerns nicht gut brechen. Hierdurch kann ggf. die Zerkleinerungsvorrichtung verstopft oder sogar beschädigt werden.

Derartige Lagen, wie zum Beispiel Pannenschutzeinlagen wie sie in der DE102005018742A1 beschrieben sind, müssten, um die genannten Nachteile zu vermeiden, somit in einem zusätzlichen Verfahrensschritt entfernt werden.

Insbesondere weist der Fahrradreifen somit bevorzugt keine Pannenschutzeinlage auf, wie sie in der DE102005018742A1 beschrieben ist.

Sollte je nach Anwendungsgebiet des Fahrradreifens ein Pannenschutz gewünscht sein, kann er auf andere dem Fachmann bekannte Weise hergestellt werden,
Bevorzugt ist ein erfindungsgemäßer Fahrradreifen, der im Wulst Kerne aufweist, wobei die Kerne frei von Flüssigkristallpolymeren, insbesondere Aramiden, wie Kevlar^{®}, und aromatischen Polyestern, wie Vectran^{®}, sind.

Insbesondere weist der Fahrradreifen bevorzugt keinen Kern mit Fasern aus p-Aramid (Kevlar ^{®}) oder Vectran auf.

Bevorzugt bestehen die Kerne hierbei stattdessen aus Stahldraht.

Durch die Verwendung von Stahldraht im Kern anstelle der genannten Flüssigkristallpolymere lassen sich die Kerne leichter zerkleinern und müssen nicht in einem separaten Verfahrensschritt abgetrennt werden, um ein Verstopfen oder gar eine Beschädigung der Zerkleinerungsvorrichtung zu vermeiden. Hierdurch wird die Recyclingfähigkeit des erfindungsgemäßen Fahrradreifens weiter verbessert und das Verfahren zum Recyceln des erfindungsgemäßen Fahrradreifens weiter vereinfacht.

Die einzelnen Bauteile des Fahrradreifens werden auf dem Fachmann bekannte Weise miteinander in Kontakt gebracht, um einen Fahrradreifenrohling zu erzeugen. Dieser wird im Anschluss vulkanisiert.

Bevorzugt weist der erfindungsgemäße Fahrradreifen inklusive sämtlicher Ausführungsformen wenigstens eine Markierungskomponente auf.

Hierdurch lässt sich ein derartig mit einer Markierung gekennzeichneter erfindungsgemäßer Fahrradreifen, welcher frei von Ethylen-Propylen-Dien-Kautschuken und frei von Butylkautschuken und frei von halogenierten Butylkautschuken ist, insbesondere mittels Detektionsverfahren von anderen Fahrradreifen unterscheiden.

Dies ermöglicht es auf einfache Weise festzustellen, welcher Fahrradreifen besonders recyclingfähig ist und insbesondere zu Gummimehl und/oder Regenerat recycelbar ist, welche frei von Ethylen-Propylen-Dien-Kautschuken und frei von Butylkautschuken und frei von halogenierten Butylkautschuken sind.

Bei der Markierungskomponente kann es sich um jegliche Komponente handeln, die geeignet ist, einen Fahrradreifen so zu markieren, dass er insbesondere mittels Detektionsverfahren von anderen unmarkierten Fahrradreifen unterschieden werden kann.

Gemäß vorteilhafter Ausführungsformen ist die Markierungskomponente eine zusätzliche äußere Schicht, die einen Teilabschnitt eines äußeren Bauteils des Fahrradreifens bedeckt, wobei sich das Absorptionsspektrum der zusätzlichen Schicht im Bereich von 200 nm (Nanometer) bis 1 mm (Millimeter) von demjenigen der die Schicht umgebenden äußeren Oberfläche des Fahrradreifens unterscheidet.

Die zusätzliche äußere Schicht ist dabei eine Schicht, die im Wellenlängenbereich von Ultraviolettstrahlung (UV) oder sichtbarem Licht oder Infrarotstrahlung (IR), mittels eines Detektors detektiert werden kann.

Beispielsweise ist das äußere Bauteil des Reifens schwarz, da die entsprechende Kautschukmischung durch Anwesenheit von Ruß schwarz gefärbt ist. Die zusätzliche Schicht weist dann bevorzugt ein Absorptionsspektrum auf, welches sich deutlich von dem einer schwarzen Oberfläche unterscheidet.

Die zusätzliche Schicht ist insbesondere eine farbige Kennzeichnung und kann auf dem Fachmann bekannte Weise, wie beispielsweise über eine Vulkanette, auf eine Oberfläche des Fahrradreifens aufgebracht werden.

Gemäß weiterer vorteilhafter Ausführungsformen ist die Markierungskomponente wenigstens ein Magnet, wodurch eine automatisierbare Sortierung der Fahrradreifen ermöglicht wird.

Der Magnet kann dabei im inneren des Reifens angebracht sein oder an oder in einem äußeren Bauteil. Dabei kann der Magnet auch nur von einer vergleichsweise dünnen Materialschicht bedeckt sein.

Beispielsweise kann ein Magnet über eine Vulkanette in den Reifen eingebracht werden.

Der oder die Magneten lassen sich bei Bedarf dann über Magneten oder auch über ihr spezifisches Gewicht abtrennen, sodass das Recycling der erfindungsgemäßen Fahrradreifen nicht bzw. nicht signifikant beeinträchtigt wird.

Die genannten Möglichkeiten für die wenigstens eine Markierungskomponente können auch miteinander kombiniert werden.

Ein weiterer Gegenstand der vorliegenden Erfindung ist wie oben ausgeführt ein Verfahren zum Recyceln von Fahrradreifen.

Das erfindungsgemäße Verfahren umfasst wenigstens die folgenden Verfahrensschritte:
xi) Bereitstellen wenigstens eines Fahrradreifens gemäß den obigen Ausführungen;
xii) Zerkleinern des Fahrradreifens, wobei wenigstens Gummimehl erhalten wird;
xiii) Optionales Auftrennen des Gummimehls in Bestandteile mit und ohne Festigkeitsträger.

Bei dem bzw. den Fahrradreifen des erfindungsgemäßen Recycling-Verfahrens handelt es sich insbesondere und bevorzugt um Altreifen oder Ausschussware.

Auch wenn ein Fahrradreifen üblicherweise durch Gebrauch Spuren von Abrieb und ggf. weitere Gebrauchserscheinungen ausweist, bleibt die Zusammensetzung der kautschukhaltigen Bauteile, insbesondere im Hinblick auf die enthaltenen Kautschuke a) und nicht enthaltenen Kautschuke b) im Wesentlichen die gleiche. Auch die Materialien der Festigkeitsträger unterscheiden sich hinsichtlich ihrer Zusammensetzung und Recyclingfähigkeit durch den Gebrauch nicht signifikant von Neureifen.

Damit ist es ökologisch besonders vorteilhaft, wenn Fahrradreifen als gebrauchte Altreifen recycelt werden.

Der Vorteil der Erfindung kommt aber auch dann zum Tragen, wenn der Reifen nicht gefahren wurde, sondern als Neureifen zu Ausschussware klassifiziert wurde, sodass ein Recycling ebenfalls ökologisch sinnvoll ist.

Das Zerkleinern des Fahrradreifens in Schritt xii) kann mittels dem Fachmann bekannter Vorrichtungen und auf dem Fachmann bekannte Weise durchgeführt werden.

Der Verfahrensschritt xiii) ist optional.

Gemäß vorteilhafter Ausführungsformen der Erfindung wird er jedoch durchgeführt, sofern das Gummimehl Bestandteile von Festigkeitsträgern enthält. Hierdurch wird die Qualität des Gummimehls bzw. Regenerates daraus weiter verbessert, sodass ein besonders reines Gummimehl bzw. Regenerat erhalten wird.

Das Auftrennen in Schritt xiii) kann mittels dem Fachmann bekannter Vorrichtungen und auf dem Fachmann bekannte Weise durchgeführt werden, wie beispielsweise mit Zyclonen, insbesondere über das spezifische Gewicht und/oder die Partikelgröße der Gummimehlpartikel.

Gemäß bevorzugter Ausführungsformen umfasst das Verfahren zusätzlich den folgenden Verfahrensschritt:
xiv) Regenerierung des Gummimehls, insbesondere nach Schritt xii) oder des Gummimehls nach Schritt xiii), welches keine Festigkeitsträgerbestandteile enthält, durch Devulkanisation des Schwefelnetzwerkes, wodurch ein Regenerat erhalten wird, welches a) wenigstens einen Basiskautschuk enthält, der bevorzugt ausgewählt ist aus der Gruppe bestehend aus natürlichem Polyisopren (NR), synthetischem Polyisopren (IR), Butadien-Kautschuk (BR) und Styrol-Butadien-Kautschuk (SBR);
und zudem
b) frei von Ethylen-Propylen-Dien-Kautschuken und frei von Butylkautschuken und frei von halogenierten Butylkautschuken ist.

Verfahren zur Regenerierung von schwefelvernetzten Gummivulkanisaten unter Zuhilfenahme von verschiedenen Substanzen und in unterschiedlichen Apparaturen sind seit langem bekannt, wobei die Dampfregeneration, die mechanische Regeneration, die thermische Regeneration, die Regeneration durch Schallwellen, die Regeneration durch Strahlung und die chemische Regeneration bekannt sind.

Gemäß vorteilhafter Ausführungsformen wird eine Dampfregeneration insbesondere dann verwendet, wenn das Gummimehl keine textilen Festigkeitsträgerbestandteile enthält, da textile Festigkeitsträgerreste nicht dampfstabil sind.

Hierzu erfolgt bevorzugt ein Auftrennen gemäß Schritt xiii).

Gemäß bevorzugter Ausführungsformen umfasst Schritt xi) des vorstehend beschriebenen erfindungsgemäßen Verfahrens wenigstens folgende Schritte:
xi-1) Bereitstellung einer ersten Menge von Fahrradreifen, wobei die erste Menge eine Teilmenge mit erfindungsgemäßen Fahrradreifen gemäß sämtlichen obenstehenden Ausführungen umfasst, wobei die Teilmenge, bevorzugt ausschließlich, erfindungsgemäße Fahrradreifen mit einer Markierungskomponente umfasst,
xi-2) Detektion der Fahrradreifen aufweisend die Markierungskomponente durch physikalische Wechselwirkung einer Messeinheit mit der Markierungskomponente, xi-3) optional räumliches Trennen von Fahrradreifen aufweisend die Markierungskomponente von den übrigen Fahrradreifen.

Das somit beschriebene Verfahren umfassend die Teilschritte xi-1) bis xi-3) ermöglicht es somit auf einfache Weise erfindungsgemäße Fahrradreifen, die sich besonders einfach recyceln lassen, separat zu recyceln.

Sofern in der ersten Menge von Fahrradreifen in Schritt xi-1) nichterfindungsgemäße, und damit schwerer oder aufwändiger recycelbare Fahrradreifen enthalten sind, können diese mit den Teilschritten xi-2) und xi-3) auf einfache Weise durch die nicht vorhandene oder andersartige Markierung von erfindungsgemäßen und markierten Reifen unterschieden und räumlich getrennt werden. Hierdurch wird auch ein Vermengen von leichter mit weniger leicht zu recycelnden Reifen und damit eine Kontamination der erhaltenen Recyclingprodukte, wie Gummimehl und Regenerate, vermieden.

Die erhaltenen Recyclingprodukte, wie Gummimehl und Regenerate, können dann insbesondere wieder als Ausgangsmaterial in Kautschukmischungen für Reifen oder andere technische Gummiartikel verwendet werden.

Die Detektion in Schritt xi-2) kann insbesondere eine Messung des Absorptionsspektrums im Wellenlängenbereich von 200 nm bis 1 mm sein, wenn die Markierungskomponente eine zusätzliche äußere Schicht ist, deren Absorptionsspektrum sich von dem der umgebenden äußeren Oberfläche des Reifens unterscheidet, wie oben beschrieben.

Die Messeinheit ist dabei insbesondere ein geeignetes Messgerät, welches im entsprechenden Wellenlängenbereich misst, wie zum Beispiel ein UV-VIS Spektrometer oder ein IR-Handgerät.

Die Detektion in Schritt xi-2) kann alternativ mittels eines Magneten erfolgen, wenn die Markierungskomponente ein Magnet ist, wie oben beschrieben.

Die Messeinheit ist dabei bevorzugt ein Magnetfeldsensor.

Der Verfahrensschritt xi-3) ist optional und wird bevorzugt durchgeführt, wenn nicht sämtliche Fahrradreifen auf die gleiche, einfache Weise zu recyceln sind und somit eine Unterscheidung zweckmäßig ist.

Hierbei dient der Schritt xi-3) dazu, die ursprüngliche Menge von Fahrradreifen in zwei oder mehrere räumlich voneinander separierte Mengen, wie beispielsweise unterschiedliche Stapel, zu sortieren, insbesondere auch um eine spätere Kontamination zu vermeiden, wie oben beschrieben.

Nachfolgend wird die Erfindung anhand von Ausführungsbeispielen weiter im Detail verdeutlicht.

### A) Kautschukmischungen für Fahrradreifen:

**Tabelle 1, Angaben in phr**

| | E1 | E2 | E3 | E4 |
|---|---|---|---|---|
| NR* | 65 | 100 | 25 | 70 |
| BR** | 35 | 0 | 25 | 30 |
| SSBR*** | 0 | 0 | 50 | 0 |
| EPDM^{#} | 0 | 0 | 0 | 0 |
| IIR^{##} | 0 | 0 | 0 | 0 |
| XIIR^{###} | 0 | 0 | 0 | 0 |
| Weichmacher | 3 | 0 | 24 | 5 |
| Zinkoxid | 3 | 3 | 3 | 3 |
| Füllstoffe | 31 | 51 | 61 | 31 |
| Alterungsschutzmittel | 4.5 | 1.5 | 4 | 7.5 |
| Beschleuniger | 1.1 | 0.6 | 3 | 2.7 |
| Schwefel | 2.1 | 8 | 1.5 | 6 |

| | | | | |
|---|---|---|---|---|
| * NR = natürliches Polyisopren ** BR = Butadien-Kautschuk *** SSBR = lösungspolymerisierter Styrol-Butadien-Kautschuk ^{#} EPDM = Ethylen-Propylen-Dien-Kautschuk ^{##} IIR = Butylkautschuk ^{###} XIIR = Halogenierter Butylkautschuk | | | | |

Mittels der jeweiligen Mischungen wurde entsprechende kautschukhaltige Bauteile bereitgestellt, aus denen wiederum entsprechende Fahrradreifen hergestellt wurde. Als Festigkeitsträger wurden in der Karkasse Nylon6.6 und als Kerne Stahl eingesetzt, wobei auf Vectran und Kevlar vollständig verzichtet wurde. Es wurden Reifen der Dimension 47-622 gefertigt, wobei jeder Reifen mit einer auffälligen, schwarzen optischen Markierung auf rotem Hintergrund gekennzeichnet war, um dessen besondere Recyclingfähigkeit durch Abwesenheit von EPDM, IIR und XIIR hervorzuheben.

### B) Recycling der Reifen

Die unter A) gefertigten Fahrradreifen wurden einem Recyclingverfahren folgendermaßen zugeführt:
In einem ersten Schritt wurden die Reifen zunächst von groben Verunreinigungen befreit und von ggf. anderen nicht-erfindungsgemäßen Fahrradreifen getrennt. Anschließend wurden die so selektierten Fahrradreifen mittels Zwei-Wellen-Schredder mechanisch zerkleinert und mit einem Scher-Sieb als Gummimehl abgetrennt. Mittels Magnetabscheider wurden metallische Festigkeitsträger abgesondert.

In einem weiteren Schritt wurde dieses Gummimehl unter Zugabe von Devulkanisationshilfsmitteln in einer Knetvorrichtung mechanisch devulkanisiert, um die bereits ausgebildeten Schwefelvernetzungen aufzubrechen. Als Ergebnis wurde ein Regenerat erhalten.

Das Regenerat steht anschließend in einem nächsten Schritt zur Verfügung, um in mechanisch hoch beanspruchte Mischungen wie z.B. Laufstreifen eingesetzt zu werden, da das Regenerat frei von EPDM, IIR und XIIR ist.

Das vorstehend beschriebene Recyclingverfahren erlaubt es zuverlässig solche Reifen zu selektieren, die problemlos einem Zerkleinerungsverfahren unterzogen werden können. Aufgrund der verwendeten Nylon-Festigkeitsträger bestand kein Risiko, dass mechanische bzw. bewegliche Teile in der Rotorschere des Zwei-Wellen-Schredders bzw. des Scher-Siebes blockieren, wie es beispielsweise durch Vectran und Kevlar in Form ihrer Garne regelmäßig passiert.

## Patentansprüche

1. Fahrradreifen aufweisend eines oder mehrere kautschukhaltige Bauteile, **dadurch gekennzeichnet, dass** er in sämtlichen kautschukhaltigen Bauteilen eine Kautschukmischung aufweist, die schwefelvernetzt ist und
a) wenigstens einen Dienkautschuk enthält, der ausgewählt ist aus der Gruppe bestehend aus natürlichem Polyisopren (NR), synthetischem Polyisopren (IR), Butadien-Kautschuk (BR) und Styrol-Butadien-Kautschuk (SBR);
und wobei sämtliche Kautschukmischungen der kautschukhaltigen Bauteile
b) frei von Ethylen-Propylen-Dien-Kautschuken und frei von Butylkautschuken und frei von halogenierten Butylkautschuken sind.

2. Fahrradreifen nach Anspruch 1, **dadurch gekennzeichnet, dass** er wenigstens in den äußeren Bauteilen eine Kautschukmischung aufweist, die wenigstens ein Alterungsschutzmittel enthält, welches ausgewählt ist aus der Gruppe bestehend aus p-Phenylendiaminen, Dihydrochinolinen, Phenylnaphtylaminen, substituierten Phenolen, substituierten Bisphenolen und Benzimidazolen , bevorzugt ausgewählt ist aus der Gruppe bestehend aus p-Phenylendiaminen, substituierten Phenolen, substituierten Bisphenolen und Benzimidazolen.

3. Fahrradreifen nach Anspruch 1 oder 2, **dadurch gekennzeichnet, dass** er wenigstens in den äußeren Bauteilen eine Kautschukmischung aufweist, die wenigstens ein Alterungsschutzmittel enthält, welches ausgewählt ist aus der Gruppe bestehend aus N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD ), N-Phenyl-1-naphthylamin (PAN), 2,2'-Methylenbis(4-methyl-6-tert-butylphenol) (BKF), 2,2'-(2-Methylpropyliden)bis[4,6-xylenol], 6,6'-Di-tert-butyl-4,4'-butylidendi-m-kresol und Poly-2,2,-Trimethyl-1,2-dihydrochinolin (TMQ).

4. Fahrradreifen nach einem der vorherigen Ansprüche, **dadurch gekennzeichnet, dass** er in wenigstens einem äußeren nicht-schwarzen Bauteil eine Kautschukmischung aufweist, die wenigstens ein Alterungsschutzmittel enthält, welches ausgewählt ist aus der Gruppe bestehend aus 2,2'-Methylenbis(4-methyl-6-tert-butylphenol) (BKF), 2,2'-(2-Methylpropyliden)bis[4,6-xylenol] und 6,6'-Di-tert-butyl-4,4'-butylidendi-m-kresol.

5. Fahrradreifen nach einem der vorherigen Ansprüche, **dadurch gekennzeichnet, dass** er keine Festigkeitsträger aufweist, welche Garne aus Flüssigkristallpolymeren umfassen.

6. Fahrradreifen nach einem der vorherigen Ansprüche, **dadurch gekennzeichnet, dass** er im Wulst Kerne aufweist, wobei die Kerne frei von Flüssigkristallpolymeren sind, wobei die Kerne bevorzugt aus Stahldraht bestehen.

7. Fahrradreifen nach einem der vorherigen Ansprüche, **dadurch gekennzeichnet, dass** er wenigstens eine Markierungskomponente aufweist.

8. Fahrradreifen nach Anspruch 7, **dadurch gekennzeichnet, dass** die wenigstens eine Markierungskomponente eine zusätzliche äußere Schicht ist, die einen Teilabschnitt eines äußeren Bauteils des Fahrradreifens bedeckt, wobei sich das Absorptionsspektrum der zusätzlichen Schicht im Bereich von 200 nm (Nanometer) bis 1 mm (Millimeter) von demjenigen der die Schicht umgebenden äußeren Oberfläche des Fahrradreifens unterscheidet.

9. Fahrradreifen nach einem der Ansprüche 7 oder 8, **dadurch gekennzeichnet, dass** die wenigstens eine Markierungskomponente ein Magnet ist.

10. Verfahren zum Recyceln von Fahrradreifen, umfassend wenigstens die folgenden Verfahrensschritte:
xi) Bereitstellen wenigstens eines Fahrradreifens nach einem der Ansprüche 1 bis 9;
xii) Zerkleinern des Fahrradreifens, wobei wenigstens Gummimehl erhalten wird;
xiii) Optionales Auftrennen des Gummimehls in Bestandteile mit und ohne Festigkeitsträger.

11. Verfahren nach Anspruch 10, umfassend zusätzlich:
xiv) Regenerierung des Gummimehls, insbesondere nach Schritt xii) oder des Gummimehls nach Schritt xiii), welches keine Festigkeitsträgerbestandteile enthält, durch Devulkanisation des Schwefelnetzwerkes, wodurch ein Regenerat erhalten wird, welches a) wenigstens einen Basiskautschuk enthält, der bevorzugt ausgewählt ist aus der Gruppe bestehend aus natürlichem Polyisopren (NR), synthetischem Polyisopren (IR), Butadien-Kautschuk (BR) und Styrol-Butadien-Kautschuk (SBR);
und zudem
b) frei von Ethylen-Propylen-Dien-Kautschuken und frei von Butylkautschuken und frei von halogenierten Butylkautschuken ist.

12. Verfahren nach einem der Ansprüche 10 oder 11, wobei Schritt xi) wenigstens folgende Schritte umfasst:
xi-1) Bereitstellung einer ersten Menge von Fahrradreifen, wobei die erste Menge eine Teilmenge mit Fahrradreifen nach einem der Ansprüche 1 bis 9 umfasst, wobei die Teilmenge, bevorzugt ausschließlich, Fahrradreifen nach einem der Ansprüche Anspruch 7 bis 9 umfasst,
xi-2) Detektion der Fahrradreifen nach einem der Ansprüche 7 bis 9 aufweisend die wenigstens eine Markierungskomponente durch physikalische Wechselwirkung einer Messeinheit mit der Markierungskomponente,
xi-3) optional räumliches Trennen von Fahrradreifen nach einem der Ansprüche 7 bis 9 von den übrigen Fahrradreifen.
